# EUROPEAN PATENT SPECIFICATION

(11) **EP 1 107 522 B1**
(45) Date of publication and mention of the grant of the patent: **16.06.2010**
(21) Application number: 99850193.6
(22) Date of filing: 06.12.1999
(51) Int. Cl.: H04W 84/20, H04W 76/02

(54) **Intelligent piconet forming**
Intelligente Herstellung von Piconets
Formation intelligent de Piconets

(43) Date of publication of application: 13.06.2001
(73) Proprietor: TELEFONAKTIEBOLAGET LM ERICSSON (publ), 164 83 Stockholm (SE)
(72) Inventor: Rune, Johan, 181 30 Lidingö (SE); Johansson, Per, 124 30 Hägersten (SE); Gehrmann, Christian, 112 52 Stockholm (SE); Sörensen, Johan, 241 91 Eslöv (SE); Larsson, Tony, 113 54 Stockholm (SE)
(74) Representative: Holmberg, Martin Tor

(56) References cited:
- WO-A-99/14898
- WO-A-99/37106
- US-A- 5 818 828
- JAMES KARDACH: "Bluetooth Architecture Overview" INTERNET, [Online] 1998, pages 1-45, XP002141146 Retrieved from the Internet: <URL:http://grouper.ieee.org/Groups/802/11 /Tutorial/90538S-WPAN-Bluetooth-Tutorial.p df> [retrieved on 2000-06-26]
- "Digianswer announces world's first commercial Bluetooth products" DIGIANSWER A/S PRESSROOM, [Online] 9 October 1999 (1999-10-09), pages 1-4, XP002141147 Retrieved from the Internet: <URL:http://www.digianswer.com/pressroom_r el_1.asp> [retrieved on 2000-06-26]

## Description

### FIELD OF THE INVENTION

The invention is mainly related to the problem of forming ad-hoc wireless networks and more particularly to the wireless technology Bluetooth and how a Bluetooth device may best discover masters in existing piconets and connect as a slave to those masters without having to use the master-slave switch.

### RELATED ART

Bluetooth is a relatively new specification for wireless communication of data and voice based on a low-cost short-range radio link. It can be built into a 9x9mm microchip which facilitates ad-hoc connections for both stationary and mobile communication environments. Information in the present application is based in part on the Bluetooth specification, "Specification of the Bluetooth System", July 26th 1999, the entirety of which is hereby incorporated by reference.

The original intention of Bluetooth was to eliminate cables between phones, PC-cards, wireless headsets, etc., but today Bluetooth is a true ad-hoc wireless network technology intended for both synchronous traffic, e.g. voice, and asynchronous traffic, e.g. IP based data traffic. The aim is that any commodity device such as telephones, PDAS, laptop computers, digital cameras, video monitors, printers, fax machines, etc. should be able to communicate over the radio interface, i.e. any of these devices could have contain a Bluetooth radio chip and its software.

Beyond merely replacing the cables between various devices, Bluetooth technology will provide a bridge to existing data networks, a peripheral device, and a mechanism to form small private ad-hoc groupings of connected devices away from fixed network infrastructures or connected to a fixed infrastructure via a gateway. Bluetooth radio uses a fast acknowledgement and frequency hopping scheme to make the link robust. The radio modules avoid interference with one another by hopping to a new frequency after transmitting or receiving a packet. Compared with other systems operating in the same frequency band, the Bluetooth radio typically hops faster and uses shorter packets. The radio band used by Bluetooth is the unlicensed 2.4 GHz ISM (Industrial-Scientific-Medical) band with a channel spacing of 1 MHz.

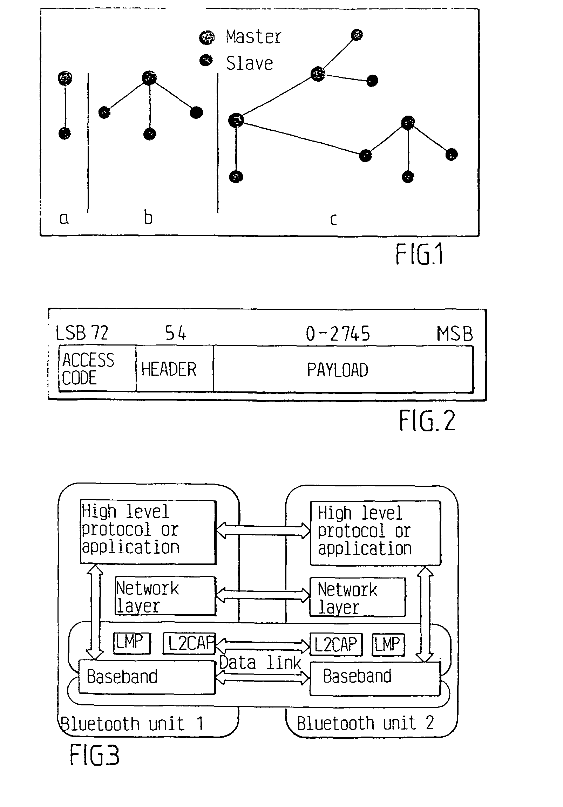

The Bluetooth system consists of a radio unit, a link control unit, and a support unit for link management and host terminal interface function. The system provides a point-to-point connection (only two Bluetooth (BT) units involved), or a point-to-multipoint connection. In the point-to-multipoint connection, the channel is shared among several BTs. Two or more Bluetooth (BT) units sharing the same channel form a *piconet* (see Figure 1). Within a piconet a BT unit can have either of two roles: master or slave. Within each piconet there may be only one master (and there must always be one) and one (Figure 1(a)) slave or more than one (Figure 1(a)), up to seven active slaves. Any BT unit can become a master in a piconet.

Furthermore, two or more piconets can be interconnected, forming what is called a *scatternet* (see Figure 1(a)). The connection point between two piconets consists of a BT unit that is a member of both piconets. A BT unit can simultaneously be a slave member of multiple piconets, but only master in one (although a BT unit that acts as master in one piconet can participate in other piconets as a slave). A BT unit can only transmit and receive data in one piconet at a time, so participation in multiple piconets has to be on a time division multiplex basis.

The Bluetooth system provides full-duplex transmission built on slotted Time Division Duplex (TDD), where each slot is 0.625 ms long. The time slots are numbered sequentially using a very large number range (cyclic with a cycle of 2²⁷). Master-to-slave transmission always starts in an even-numbered time slot while slave-to-master transmission always starts in an odd-numbered time slot. An even-numbered time slot and its subsequent odd-numbered time slot (i.e. a master-to-slave time slot and a slave-to-master time slot, except when multi-slot packets are used) together are called a frame. There is no direct transmission between slaves, either within a Bluetooth piconet or between two different piconets.

The communication within a piconet is organised such that the master polls each slave according to some polling scheme. With one exception a slave is only allowed to transmit after having been polled by the master. The slave will then start its transmission in the slave-to-master time slot immediately following the packet received from the master. The master may or may not include data in the packet used to poll a slave. The only exception to the above principle is that when a slave has an established Synchronous Connection Oriented (SCO) link it is always allowed to transmit in the pre-allocated slave-to-master time slot, even if not explicitly polled by the master in the preceding master-to-slave time slot.

Each BT unit has a globally unique 48 bit IEEE 802 address. This address, called the Bluetooth Device Address (BD_ADDR) is assigned when the BT unit is manufactured and it is never changed. In addition to this, the master of a piconet assigns a local Active Member Address (AM_ADDR) to each active slave member of the piconet. The AM_ADDR, which is only three bits long, is dynamically assigned and de-assigned and is unique only within a single piconet. The master uses the AM_ADDR when polling a slave in a piconet. However, when the slave, triggered by a packet from the master addressed with the slave's AM_ADDR, transmits a packet to the master, it includes its own AM_ADDR (not the master's) in the packet header. An AM_ADDR for the master is not included since it does not exist. The master of a piconet never assigns an AM_ADDR to itself.

Even though all data is transmitted in packets, the packets can carry both synchronous data, on Synchronous Connection Oriented (SCO) links (mainly intended for voice traffic), and asynchronous data, on Asynchronous Connectionless (ACL) links. The SCO link is a symmetric point-to-point link between the master and a specific slave. The SCO link reserves slots and can therefore be considered as a circuit-switched connection between the master and the slave. The ACL link is a point-to-multipoint link between the master and all the slaves participating on the piconet. In the slots not reserved for SCO links, the master can establish an ACL link on a per slot basis to any slave. The ACL link provides a packet-switched connection between the master and all active slaves participating in the piconet.

Depending on the type of packet that is used, an acknowledgement and retransmission scheme is used (not for SCO packets transferring synchronous data) to ensure reliable transfer of data. Forward error correction (FEC) in the form of channel coding is also used which limits the impact of random noise on long-distance links.

The standard format of a Bluetooth packet (although there are exceptions for certain control packets) is shown in Figure 2. The access code and header are of fixed size, 72 bits and 54 bits, respectively. The payload can range from zero to a maximum of 2745 bits. The AM_ADDR is located in the packet header followed by some control parameters (e.g. a bit indicating acknowledgement or retransmission request of the previous packet, when applicable) and a header error check (HEC).

The Access Code in the packet can be of three different types:
- Channel Access Code (CAC)
- Device Access Code (DAC)
- Inquiry Access Code (IAC)

The Channel Access Code identifies a channel that is used in a certain piconet, i.e. in essence the Channel Access Code identifies the piconet. All packets exchanged within a piconet carry the same Channel Access Code. The Channel Access Code is derived from the BD_ADDR of the master unit of the piconet. The Device Access Code is derived from a BD_ADDR of a particular BT unit. It is used for special signalling procedures, e.g. the PAGE procedure. The Inquiry Access Code comes in two variants: the General Inquiry Access Code (GIAC) and the Dedicated Inquiry Access Code (DIAC). Both are used in the INQUIRY procedure, explained in more detail below.

The format of the payload depends on the type of packet. The payload of an ACL packet consists of a header, a data field and, with the exception of AUX1 type packets, a cyclic redundancy check (CRC). The payload of an SCO packet consists of only a data field. In addition there are hybrid packets including two data fields, one for synchronous data and one for asynchronous data. Packets in which the payload does not include a CRC are neither acknowledged nor retransmitted.

The protocol layers of a Bluetooth system are illustrated in Figure 3. The Baseband, LMP and L2CAP represent existing Bluetooth specific protocols. The "High level protocol or application" layer represents protocols that may or may not be Bluetooth specific while the Network layer is currently not specified in the Bluetooth standard.

A limitation of the Bluetooth system is that in the current standard specifications there is no way to address and route packets from one piconet to another. How inter-piconet communication is performed in a scatternet is not specified, although there are proposals for how to achieve this.

An important capability in any ad-hoc networking technology is the *neighbour discovery* feature. This is true also for Bluetooth. Without a neighbour discovery capability a BT unit would not be able to find any other BT units to communicate with and consequently no ad-hoc network would be formed. The neighbour discovery procedure in Bluetooth consists of the INQUIRY message and the INQUIRY RESPONSE message. An "inquiry" procedure is defined which is used in applications where the destination's device address is unknown to the source. One can think of e.g. public facilities like printers or facsimile machines. Alternatively, the inquiry procedure can be used to discover which other Bluetooth units are within range.

A BT unit wanting to discover neighbouring (i.e. within radio coverage) BT units will transmit repeatedly, according to well specified timing and frequency sequences, INQUIRY messages and listen for INQUIRY RESPONSE messages, which are optional. An INQUIRY message consists of only an Inquiry Access Code. It does not contain any information about the source but may indicate which class of devices should respond. The Inquiry Access Code can be a General Inquiry Access Code (GIAC), which is sent to discover any BT unit in the neighbourhood, or a Dedicated Inquiry Access Code (DIAC), which is sent to discover only a certain type of BT units, for which a particular DIAC is dedicated.

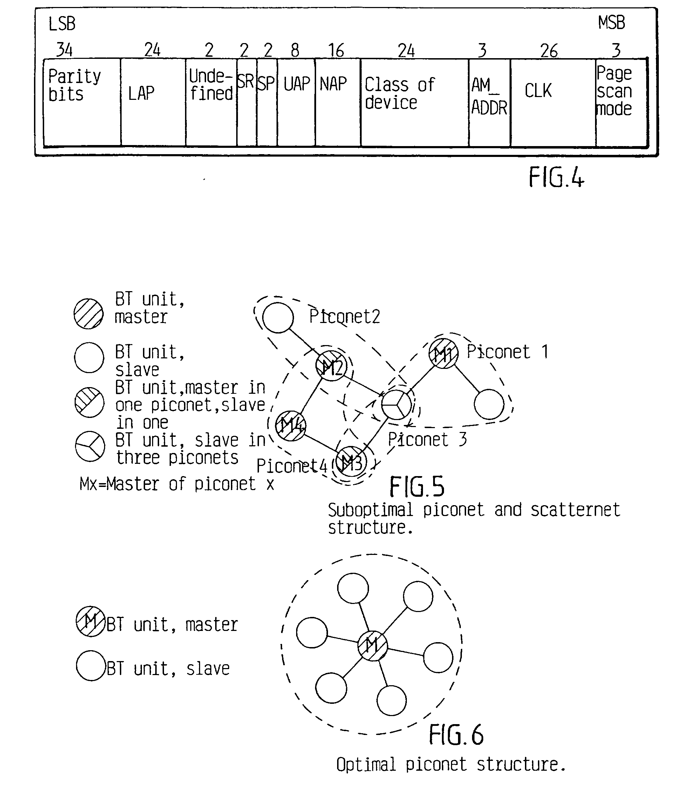

A BT unit receiving an INQUIRY message (including the GIAC or an appropriate DIAC) may respond with an INQUIRY RESPONSE message. The INQUIRY RESPONSE message is really an FHS (Frequency Hop Synchronisation) packet (see Figure 4). The FHS is a special control packet revealing, among other things the Bluetooth device and the clock of the sender. The payload consists of eleven fields. All fields in the packet, except the AM_ADDR field (and the "Undefined" field of course) indicate properties or parameters of the BT unit that sends the FHS packet. The LAP (Lower Address Part), UAP (Upper Address Part) and NAP (Non-significant Address Part) fields together comprise the BD_ADDR. The "Class of device" field indicates the class of device of the BT unit. The CLK field contains the current value of the BT unit's internal clock. The SR, SP and "Page scan mode" fields are all control parameters concerning the PAGE procedure. The AM_ADDR field can be used to assign an AM_ADDR to a BT unit becoming a slave in a piconet, otherwise the three bits should all be set to zero. The "Undefined" field consists of two bits, reserved for future use, which should be set to zero. This will be significant in the present invention.

An FHS packet is also used for other purposes in a Bluetooth system in addition to the INQUIRY RESPONSE, e.g. for synchronisation of the frequency hop channel sequence (that is where its name comes from), a page master response and in the master-slave switch. By listening for INQUIRY RESPONSE messages the BT unit that initiated the INQUIRY procedure can collect the BD_ADDR and internal clock values of the neighbouring BT units.

Related to the INQUIRY procedure is the PAGE procedure, which is used to establish an actual connection between two BT units. Once the BD_ADDR of a neighbouring BT unit is known (as a result of an INQUIRY procedure) the neighbouring BT unit can be paged with a PAGE message. Also knowing the internal clock value of the BT unit to be paged will potentially speed up the PAGE procedure, since this makes it possible for the paging unit to estimate when and on what frequency hop channel the neighbouring BT unit will listen for PAGE messages.

A PAGE message consists of the Device Access Code (DAC), derived from the BD_ADDR of the paged BT unit. A BT unit receiving a PAGE message including its own DAC responds with an identical packet (i.e. including only the DAC of the paged BT unit). The paging BT unit then replies with an FHS packet, including the BD_ADDR of the paging BT unit, the current value of the internal clock of the paging BT unit, the AM_ADDR assigned to the paged BT unit and some other parameters (see Figure 4). The paged BT unit then responds once again with its DAC and thereby the connection between the two BT units is established.

If the paging BT unit already was the master of a piconet, the paged BT unit has now joined this piconet as a new slave unit. Otherwise, the two BT units have just formed a new piconet with the paging BT unit as the master unit. Since the INQUIRY message does not include any information about its sender (in particular not its BD_ADDR), the BT unit that initiated the INQUIRY procedure is the only one that can initiate a subsequent PAGE procedure. Thus, the BT unit initiating an INQUIRY procedure will also be the master of any piconet that is formed as a result of a subsequent PAGE procedure. However, if considered necessary, the roles of master and slave can be switched using the master-slave-switch mechanism in Bluetooth. This, however is a complex and extensive procedure resulting in a redefinition of the entire piconet, involving also all other slave units in the piconet.

The INQUIRY and PAGE procedures are well specified in the current Bluetooth standard. These are all the tools that are needed to form a new Bluetooth piconet or to join an existing one. However, even though the tools as such are well specified, there are no rules or guidelines as to how to use them. When neighbours are discovered there is no way to know who to connect to in order to form an appropriate piconet. And even if the master-slave-switch mechanism exists, using it is an extensive procedure and it is hard to know when to use it in order to improve the efficiency of a piconet. Hence, piconets will more or less form at random, often resulting in far from optimal piconet and scatternet structures.

An exception is when the BT unit wishing to establish a connection already knows the BD_ADDR of the BT unit it wants to connect to. The use of the Dedicated Inquiry Access Code in the INQUIRY messages and the Class of device field in the FHS packet (indicating the class of device of the BT unit that sends the FHS packet) can also be used to impose a certain control of the forming of piconets. However, to a large extent, the BT units forming a piconet or a scatternet will be groping in the dark.

The piconet and scatternet forming procedures would be facilitated and better piconet and scatternet topologies would be possible to achieve, if more information about the involved BT units could be exchanged before the piconets and scatternets are actually established. For this purpose the present intention introduces simple mechanisms for exchanging small, but valuable, pieces of information during the INQUIRY and PAGE procedures and a simple mechanism to increase the control of the forming of piconets and scatternets, based on the exchanged information.

Since Bluetooth is the main target, the invention will be described in a Bluetooth context using Bluetooth terminology. However, it will also be briefly described how the intention can be generalised to be applicable to other ad-hoc network technologies.

The information exchanged during the INQUIRY and PAGE procedures is not enough to determine how to establish connections in order to form an efficient piconet. Furthermore, the fact that the BT unit that initiates an INQUIRY procedure will have to be the master of any piconet that forms as a result of a subsequent PAGE procedure makes the forming of piconets and scatternets inflexible. The complex and extensive master-slave-switch mechanism is not enough to compensate for this inflexibility.

Consider, for instance, a scenario where a number of people have gathered in a conference room for a meeting. They turn on their Bluetooth laptops, which at random start to send INQUIRY messages and listen for INQUIRY messages from other BT units. Some other people may also join the meeting a bit late resulting in more INQUIRY procedures. The result of these random INQUIRY procedures(followed by PAGE procedures and the forming of piconets) may well be something like what is shown in Figure 5, while an optimal piconet structure could be similar to what is shown in Figure 6.

When a new BT unit moves into the neighbourhood of an existing piconet, e.g. like in this meeting scenario, it may want to communicate with the BT units connected to that piconet. What the BT unit would like to do then is to join the piconet as a new slave unit. However, the means by which to achieve this provided by the current Bluetooth specifications are few and inefficient. The BT unit would have to wait and hope to be discovered by the master unit of the piconet, with an INQUIRY message from the master unit, and subsequently paged and connected. However, when receiving an INQUIRY message, this does not provide any information about the sender. So an INQUIRY message received by the BT unit may also be from a slave unit (which is actually more likely, since there are more slave units).

In any case waiting and hoping is not an efficient method, but the current Bluetooth standard allows an alternative way. The BT unit itself can send INQUIRY messages and hope to receive a response from the master unit of the piconet. But the INQUIRY RESPONSE message (an FHS message) does not tell its receiver whether the sender is a master of a piconet or not. So the BT unit has to take a chance and page and connect to a responding BT unit, hoping that the responding BT unit turns out to be the master of the piconet. If the BT unit is lucky, and actually manages to connect to the master unit of the existing piconet, a new piconet is formed with the inquiring (and paging) BT unit as the master unit and the paged master unit (of the already existing piconet) as a slave unit.

To actually join the.old piconet the newly arrived BT unit has to request a master-slave switch. This master-slave switch will make the master unit of the old piconet (which is also a slave unit of the new piconet) master also in the new piconet. Then, per definition (since the Channel Access Code identifying the piconet is derived from the master unit's BD_ADDR), the two piconets will merge into one, making the new BT unit a slave unit in the merged piconet. Hence, joining an existing piconet as a slave unit requires first of all luck, and possibly also a master-slave switch. Accordingly, something more is needed than the existing "wait and hope" and "chance connection" methods as specified. Related art is disclosed in D1: XP 2141146 (James Kardach: "Bluetooth Architecture Overview", 1998), showing the establishment of an ad-hoc system, and in D2: EP 748,082, showing role switching in an already existing network.

### SUMMARY OF THE INVENTION

The invention is mainly related to the problem of forming ad-hoc wireless networks and more particularly to the wireless technology Bluetooth and how a Bluetooth device may best discover masters in existing piconets and connect as a slave to those masters without having to use the master-slave switch.

As can be seen above, there still exists disadvantages with the current methods of forming ad-hoc networks in the Bluetooth system. A Bluetooth unit cannot easily discover which other BT units exist as neighbouring masters or slaves. There is also a problem in joining as a slave without using the master-slave switch.

Accordingly, it is an object of the present invention to provide a method to more easily find out the roles (master or slave) of the neighbouring BT units to a particular BT unit, i.e. whether the neighbouring BT units are masters or slaves in existing piconets. In addition, a method is presented which allows the BT unit to connect a master as a slave without using the complicated master-slave switch. The inventive solution can be divided into two basic parts.

First, a few additional small, but vital, pieces of information are exchanged between two BT units during the INQUIRY procedure. This provides some information about the responding BT unit's status in existing piconet(s), which facilitates the decision of what BT unit to attempt to connect. A similar improvement of the INQUIRY procedure can be achieved in an alternative way, by using a modified INQUIRY message. These two alternatives, which are the first part of the solution, are described in further detail below.

In the second part of the invention a new mechanism is introduced by which the initial inquiring and paging BT unit can become a slave unit in a newly formed piconet or in an already existing piconet. This new mechanism is used during the PAGE procedure and hence the use of the complex and extensive master-slave-switch mechanism is avoided, although there may of course be other situations when the master-slave-switch mechanism is still needed. This second part of the solution is also described in further detail below.

Some merits of the invention include providing means to impose an intelligent control of the forming of piconets in general. Efficient mechanisms are presented which enable a BT unit to join an existing piconet. In addition the present invention enables exchange of piconet related information during the INQUIRY procedure and enhances the INQUIRY procedure so that master units of existing piconets can be discovered. The second part of the invention provides a mechanism by which the initially inquiring and paging BT unit can become a slave unit in a newly formed or previously existing piconet without going through the master-slave switch procedure. Furthermore, the inventive solution can be used to facilitate reforming of scatternet structures.

The preferred procedures of the invention do not imply modifications of any of the existing Bluetooth message formats although some of the alternative procedures require modifications of existing message formats.

Although the preferred embodiments of the present invention are directed to a Bluetooth system, the ideas presented are also applicable to general ad-hoc networks which have similar features as Bluetooth. The present invention provides means to impose an intelligent control of the forming of ad-hoc networks in general and enables exchange of ad-hoc network related information during the neighbour discovery procedure. A mechanism is provided for the unit initiating the establishment of an ad-hoc network to transfer the specific role of the initiator to another unit during the establishment phase.

Although the invention has been summarised above, the method according to the present invention is defined according to appended claims 1, 3, 18, 19, 22, 28, 29, 30 and 31. Various embodiments are further defined in the dependent claims.

### BRIEF DESCRIPTION OF THE DRAWINGS

The present invention will now be described in more detail with reference to preferred embodiments of the present invention, given only by way of example, and illustrated in the accompanying drawings, in which:
FIG. 1 is a diagram of various master-slave relationships in a Bluetooth system.
FIG. 2 is a diagram of a standard Baseband packet format.
FIG. 3 is a diagram of the Bluetooth protocol layers.
FIG. 4 is a diagram of an FHS packet.
FIG. 5 is a diagram of a suboptimal piconet and scatternet structure.
FIG. 6 is a diagram of an optimal piconet structure.
FIG. 7 is a flowchart showing the combined procedures of both parts of the present invention.
FIG. 8 shows an alternate flowchart of the combined procedures of both parts of the present invention.

### DETAILED DESCRIPTION

The first part of the present invention allows a Bluetooth unit to discover whether a neighbouring Bluetooth unit is connected to an existing piconet and, in such case, whether it is connected as a master or as a slave. In particular, the present invention allows a Bluetooth unit to discover a master in an existing piconet. Several alternative solutions are presented which improve on the procedures in the Bluetooth specification, as discussed above.

The FHS packet, which is used as the INQUIRY RESPONSE message (and in other procedures as well), includes some information about the sending BT unit, but none about the piconet the BT unit may be connected to, or even the BT unit's status in such a piconet. Including such information would give the inquiring BT unit some essential background knowledge to be used when the BT unit decides what other BT unit to attempt to connect.

A very basic piece of information is whether the responding BT unit is a master of an existing piconet or not. The importance of this piece of information is illustrated by the meeting scenario described above. This can be coded using one of the two undefined (reserved for future use) bits in the FHS packet, as shown in Figure 4. Preferably, setting the bit to one would mean that the sending BT unit is the master of a piconet, while setting the bit to zero would mean that the sending BT unit is not the master of a piconet.

The piconet related information in the FHS packet can be extended by using also the second of the two undefined bits. This can be used to indicate whether the sending BT unit is a slave unit in at least one piconet. Preferably, setting the bit to one would mean that the sending BT unit is a slave unit in one or more piconet(s), while setting the bit to zero would mean that the sending BT unit is not a slave unit of any piconet at all.

Hence, we get the following four possible combinations of the two bits (in this illustration the right bit indicates the "master status" and the left bit indicates the "slave status" of the sending BT unit):
- 00: 0The sending BT unit is not connected to a piconet or the sending BT unit does not support this use of the "Undefined" field.
- 01: The sending BT unit is the master unit of a piconet.
- 10: The sending BT unit is a slave unit in one or more piconet(s).
- 11: The sending BT unit is the master unit of one piconet and a slave unit in one or more other piconet(s).

Backwards compatibility with the current Bluetooth specification is achieved with this solution, since the current specification of the FHS packet states that the two undefined bits should be set to zero. This would indicate that the sending BT unit is not connected to any piconet, which is "harmless" information.

An alternative way to include this information in the FHS packet is to use the *Class of device* field as shown in Figure 4. The current specification allows for alternative codings of a part of the *Class of device* field. A new coding of this part of the *Class of device* field could be used to include the above information (and possibly also other useful piconet (and scatternet) related information).

Yet an alternative way to include this information in the FHS packet is to use the AM_ADDR field. According to the current specification of the FHS packet the three bits of the AM_ADDR field should be set to zero, when the FHS packet is used as an INQUIRY RESPONSE message, since assigning an AM_ADDR is not applicable in that case. Therefore, these three bits are available to code other information, e.g. piconet related information. By using the AM_ADDR field eight different states could be coded instead of the four states coded with the undefined bits. It would also be possible to use both the undefined bits and the AM_ADDR field to code piconet related (or other) information, resulting in five bits which translates to 32 possible states. In the following discussion it will be assumed that only the three bits of the AM_ADDR field is used for this purpose, while the two undefined bits are still undefined, unless explicitly stated otherwise. Two of the three bits in the AM_ADDR field could be used to code exactly the same information as suggested for the two undefined bits above. The third bit could be used to indicate whether the sending BT unit, when subsequently being paged, will want to connect to the paging unit as a slave unit or as a master unit (using the modified PAGE procedure according to the present invention as described below).

A reason for not wanting to become a master unit when subsequently being paged may e.g. be that the BT unit is already the master unit of a piconet with seven active slave units, giving no room for yet another active slave unit. Preferably, setting the third bit to one would indicate that the sending BT unit prefers to have the role of the master unit after a subsequent (modified) PAGE procedure, while setting the third bit to zero would indicate a preference for the slave role. This coding provides backwards compatibility with the current Bluetooth specification since, according to the current specification of the FHS packet, the three bits of the AM_ADDR field should be set to zero when the FHS packet is used as an INQUIRY RESPONSE message. The following are the resulting possible combinations of the three bits of the AM _ ADDR field (in this illustration the right-most bit indicates the "master status" and the middle bit indicates the "slave status" and the left-most bit indicates the "role preference" of the sending BT unit) :
- 000: The sending BT unit is not connected to a piconet and prefers to be a slave unit after a subsequent PAGE procedure or the sending BT unit does not support this use of the AM_ADDR field.
- 001: The sending BT unit is the master unit of a piconet and prefers to be a slave unit after a subsequent PAGE procedure.
- 010: The sending BT unit is a slave unit in one or more piconet(s) and prefers to be a slave unit after a subsequent PAGE procedure.
- 011: The sending BT unit is the master unit of one piconet and a slave unit in one or more other piconet(s) and prefers to be a slave unit after a subsequent PAGE procedure.

- 100: The sending BT unit is not connected to a piconet and prefers to be a master unit after a subsequent (modified) PAGE procedure.
- 101: The sending BT unit is the master unit of a piconet and prefers to be a master unit after a subsequent (modified) PAGE procedure.
- 110: The sending BT unit is a slave unit in one or more piconet(s) and prefers to be a master unit after a subsequent (modified) PAGE procedure.
- 111: The sending BT unit is the master unit of one piconet and a slave unit in one or more other piconet(s) and prefers to be a master unit after a subsequent (modified) PAGE procedure.

If the AM_ADDR field is used for coding of piconet related information in combination with the above described use of the two undefined bits, the AM_ADDR field could e.g. be used to indicate the number of active slave units in the piconet for which the sending BT unit is the master unit (provided that the two undefined bits indicates that the BT unit is the master unit of a piconet (i.e. codes "0 1 " or " 1 1 " as defined above). The number of slave units in the piconet can be encoded in the AM_ADDR field as an ordinary binary number. Since this field has 3 bits it can encode the number of slave units in the piconet, which may be a maximum of seven. Setting the three bits to zero would mean that no information about the number of active slave units is available. Also when the undefined bits indicate that the sending BT unit is not the master unit of a piconet (i.e. codes "00" or "10" as defined above) the three bits of the AM_ADDR field should be set to zero. This use of the all-zero AM_ADDR field provides backwards compatibility with the current Bluetooth specification, since the current specification of the FHS packet states that these three bits should be set to zero when the FHS packet is used as an INQUIRY RESPONSE message. The resulting combinations of the two undefined bits and the three bits of the AM_ADDR field when used in the way described in this paragraph are listed in Table 1.

**Table 1 combinations of the two undefined bits and the three bits of the AM_ADDR field.**

| **The two undefined bits.** | **The meaning of the two undefined bits.** | **The AM_ADDR field.** | **The meaning of the 3 bits of the AM_ADDR field.** |
|---|---|---|---|
| 00 | The sending BT unit is not connected to a piconet. | 000 | This combination should be used |
| | | 001-111 | These combinations should not be used. |
| 01 | The sending BT unit is the master of a piconet. | 000 | No info available about slave units. |
| | | 001-111 | The number of active slave units in the piconet. |
| 10 | The sending BT unit is a slave unit in one or more piconet (s). | 000 | This combination should be used. |
| | | 001-111 | These combinations should not be used. |
| 11 | The sending BT unit is the master of one piconet and slave in one or more other piconet(s). | 000 | No info available about slave units. |
| | | 001-111 | The number of active slave units in the piconet in which the sending BT unit is the master unit. |

When an INQUIRY RESPONSE message is received indicating that the sending BT unit is a slave unit in one or more piconet(s) (i.e. code "10" of the undefined bits above), it would be very useful if the BD_ADDR of the master unit of the responding BT unit's piconet (or even multiple master unit BD_ADDRs if the responding BT unit is connected to more than one piconet) could be retrieved. A retrieved master unit BD_ADDR could be used to page the master unit, preferably using the modified PAGE procedure according to the present invention as described below, which lets the paging BT unit join an existing piconet without performing a master-slave switch. Since there are not enough available bits to code a BD_ADDR in the FHS packet, another method would have to be used to retrieve the information.

It should be pointed out that the information coded by the two undefined bits in the FHS message, in the Class of Device field, or by the three bits of the AM_ADDR field in the FHS packet are not the only ones possible. Useful information which may be encoded (in an FHS packet or in a modified PAGE RESPONSE message as described below) in the present invention include e.g.:
(1) whether the sending BT unit is connected to a piconet or not,
(2) whether the sending BT unit is a master or a slave(s) or both,
(3) whether the sending BT unit prefers to be a master or a slave unit after the subsequent PAGE procedure,
(4) the number of slaves in a piconet,
(5) the BD_ADDR(s) of the master(s) of the existing piconet(s) in which the sending BT unit is a slave member,
(6) the clock values (as estimated by the sending BT unit) of the master unit(s) of the existing piconet(s) in which the sending BT unit is a slave member,
(7) inter-piconet scheduling parameters,
(8) battery status,
(9) traffic parameters, or
(10) priority parameters.

The inquiring BT unit or units can use this information when making the decision as to which unit it should make a connection or connections to.

If the available bits in the FHS packet are not enough to encode the information to be transferred, another method has to be used. One possibility is to use a modified PAGE procedure, where the paging unit indicates in the PAGE message that the intention of the paging procedure is not to establish a connection, but to retrieve useful information (as outlined above) e.g. one or multiple master unit BD_ADDR(s) (of the master unit(s) of the piconet(s) to which the paged BT unit is connected as a slave unit). The paged BT unit would then respond with a new type of PAGE RESPONSE message, or with the regular one (i.e. a packet consisting of only the Device Access Code of the responding BT unit) extended with the requested information, e.g. BD_ADDR(s) in this example. In the case of master BD_ADDR(s) being requested, possibly the response message could also include the current clock value of the master unit (or each of the master units if multiple master units are indicated), as estimated by the responding slave unit, to facilitate the subsequent paging of a master unit. The indication in the modified PAGE message could be e.g. a single bit extension indicating that all available information is requested or a multiple bit extension indicating the request of relevant subsets of the available information.

Another method for a BT unit to discover master units (of already existing piconets) in the vicinity would be to introduce a new Dedicated Inquiry Access Code (DIAC). Only BT units that are master units would respond to an INQUIRY message including such a "master DIAC". A BT unit that is not a master unit would discard the INQUIRY message. The "intended-only-for-master-units" indication could also be an extension or modification of the currently existing Inquiry Access Codes (IACs). Then all the existing IACS, the General Inquiry Access Code (GIAC) as well as the Dedicated Inquiry Access Codes (DIACs), could carry an additional indication that the INQUIRY message is intended only for master units. A GIAC carrying this indication would be intended for all master units, while a DIAC carrying the indication would be intended for the master units of the BT unit type for which the DIAC is dedicated. This method using modified Inquiry Access Codes in the INQUIRY message may well be combined with the other methods previously described.

The above described DIAC method could be extended to include the use of new DIACs, as DIACs of their own or, as described above, as extensions or modifications to existing DIACs and the existing GIAC. Such other new DIACs (or DIAC/GIAC extensions/modifications) could be DIACs dedicated for BT units with a certain status. A BT unit with this certain status could be e.g.
- a BT unit being a slave unit in one and only one piconet,
- a BT unit being a slave unit in at least one piconet,
- a BT unit being a slave unit in more than one piconet,
- a BT unit being a slave unit in one or more piconets, but a master unit in none,
- a BT unit being a slave unit in one or more piconets and a master unit in one piconet,
- a BT unit being a master unit in one piconet, but a slave unit in none,
- a BT unit that is not connected to any piconet,
- a BT unit with low current traffic load,
- a BT unit with high current traffic load.

This list is of course not exhaustive, but also other types of status could be associated with new DIACs (or DIAC/GIAC extensions/modifications). Only BT units that have the particular status indicated by a certain DIAC (or GIAC extension/modification) would respond to an INQUIRY message including this DIAC (or GIAC extension/modification). Alternatively, if the particular status is indicated by an extension or modification to an existing DIAC, only the BT units of the type indicated by the DIAC, which also have the status indicated by the extension or modification, would respond to an INQUIRY message carrying this extended of modified DIAC.

The preferred alternative in this part of the present invention is to use the four combinations of the two undefined bits of the FHS packet to convey information about the sending BT unit's status in existing piconets, possibly combined with the method using the new "master DIAC".

Once the BT has discovered the masters in neighbouring piconets as outlined above it may want to connect to a master as a slave without the problems associated with the master-slave switch mechanism. The method of connecting is the focus of the second part of the invention as outlined below.

Using the first part of the invention outlined above the BT is able to discover a master unit of an already existing piconet. The master unit is discovered when an INQUIRY RESPONSE message, indicating that the responding BT unit is a master unit (using a new indication in the FHS packet or simply by responding to an INQUIRY message dedicated for master units), is received, possibly along with a number of INQUIRY RESPONSE messages from slave units. The BD_ADDR of a master unit can also have been retrieved from a slave unit in the same piconet using the modified PAGE procedure described in the previous section.

When a BT unit has discovered a master unit (of an already existing piconet), the BT unit may want to connect to this master unit as a slave. If the discovered master unit has indicated that it prefers to be a slave unit after a subsequent PAGE procedure (provided that this type of indication, as previously outlined, is used) the BT unit may choose to: (1) still try to connect to the master unit as a slave unit, (2) try to connect to the master unit as a master unit (thereby not joining the piconet of the discovered master unit, but making the discovered master unit a slave unit in a piconet where the BT unit is the master unit), or (3) refrain from paging the discovered master unit. To be able to do this without performing a master-slave switch a new mechanism is required. For this purpose the following modified PAGE procedures according to the present invention are introduced.

Just as with the regular PAGE procedure the modified procedure according to the present invention begins with a PAGE message, consisting of only the DAC of the paged BT unit, followed by an identical response package from the paged BT unit. The difference compared with the known method is that in the subsequent FHS packet from the paging BT unit an indication is included, indicating that the paging BT unit actually wants to be paged by the currently paged BT unit. One of the two undefined bits in the FHS packet could be used for this indication. Please note that using the same two undefined bits in the FHS packet for something else in the second part of the solution than in the first part of the solution is not a contradiction. It is quite possible to specify the meaning of the two bits as situation dependent, e.g. one meaning when used in the INQUIRY procedure and another meaning when used in the PAGE procedure.

Preferably, to provide backwards compatibility with the current Bluetooth specification which states that the two undefined bits should be set to zero, the bit should be set to one when indicating that a reversed paging direction is requested. The three bits of the AM_ADDR in an FHS packet indicating a request of reversed paging direction should be set to zero. Actually, an alternative way to include the indication would be to simply let the all-zero AM_ADDR indicate a request of reversed paging direction when the FHS packet is used in the PAGE procedure. The two undefined bits would then still be undefined or could be used to code the same piconet related information as described in first part of the invention where a master in a neighbouring piconet is found.

When a request for a reversed paging direction is received in a BT unit being paged, there are two alternative ways to handle the reversal of the paging direction: (1) the current PAGE procedure is terminated, immediately followed by a new one initiated by the previously paged BT unit, or (2) the paging direction is immediately reversed (without termination) by letting the BT unit receiving the request for reversed paging direction send an FHS packet (with all parameters set as if the sender is the paging BT unit) to the BT unit sending the request. In the former case the new PAGE procedure (in the reversed direction) proceeds just as a regular PAGE procedure. In the latter case the BT unit receiving the second FHS packet (i.e. the BT unit requesting the reversal of the paging direction) responds with a packet including only the BT unit's DAC (i.e. just as the final message of the regular PAGE procedure) thereby concluding the reversed PAGE procedure.

If the initially paged BT unit in the above two cases does not accept a reversal of the paging direction (e.g. because it already is a master unit and can not accept any more slave units in its piconet) this is indicated to the paging BT unit by responding to the FHS packet with a second FHS packet including the same indication of request for reversal of the paging direction, i.e. with the relevant (previously undefined) bit set or with the AM_AD DR field set to all zeros or both. The BT unit receiving this indication of that the reversal of the paging direction is not accepted (i.e. the BT unit that initiated the PAGE procedure) can then choose to either proceed with the PAGE procedure without reversing of the direction or abandon the PAGE procedure. If it chooses to proceed, this can be done in two alternative ways: (1) by restarting the PAGE procedure by sending a new initial PAGE message or (2) by sending a third FHS message (in the initial direction), this time without the indication of request for reversal of the paging direction.

An alternative procedure for reversal of the paging direction could be to let the initial PAGE message carry the indication of the request for reversal of paging direction. Since the reversal of the paging direction requires that the BD_ADDR or the DAC of the BT unit initiating the PAGE procedure be transferred to the initially paged BT unit, it is preferable that the indication consists of the BD_ADDR or the DAC of the sending BT unit. In this alternative the actual reversal of the paging direction could be performed either by terminating the PAGE procedure after the first modified PAGE message, immediately followed by a new PAGE procedure initiated by the previously paged BT unit, or the paging direction could be immediately reversed (without termination) by letting the BT unit receiving the request for reversed paging direction send an FHS packet (with all parameters set as if the sender is the paging BT unit) to the BT unit sending the request. In both cases the respective procedure proceeds as a regular PAGE procedure.

Of course, the procedures described in this section may be used even if the paged BT unit is not a master unit. There may still be reasons for the paging BT unit to become a slave of the new piconet that will be formed.

The preferred procedure in this part of the solution is to indicate the request for reversal of the paging direction using one of the undefined bits in the FHS packet and immediately reversing the paging direction by letting the receiver of the first FHS packet return another FHS packet and then proceeding as a normal PAGE procedure

The invention is not necessarily limited to a Bluetooth system, although for a system to be applicable it has to have certain similar properties. A generalisation of the present invention would be to describe it as follows:

The first part:

In an ad-hoc networking system where the participating units use a neighbour discovery mechanism and can establish distinct, albeit dynamic, ad-hoc networks, an exchange is made during the neighbour discovery procedure of information about the respective units' status in existing ad-hoc networks (or other useful unit or network related information, e.g. number of units in the ad-hoc network, address(es) of other unit(s) in the ad-hoc network, clock value(s) (of the unit itself or of other unit(s) in the ad-hoc network), scheduling parameters, battery status, traffic parameters, priority parameters, etc.). The received information can then be used in the respective units when deciding which ad-hoc network(s) to join, how to join it/them and whether to try to establish (and with which other units) a new (or several new) ad-hoc network(s). The received information could also be used to facilitate reforming of existing ad-hoc network structures.

The second part:

During the establishment of an ad-hoc network, if the initiator of the establishment automatically gets a certain specific role in the ad-hoc network, e.g. master or slave, a mechanism is provided to let the initiating unit request from another unit that it takes over the role of initiator. This "mechanism" becomes either a new parameter in an existing message used in the establishment phase or a new message.

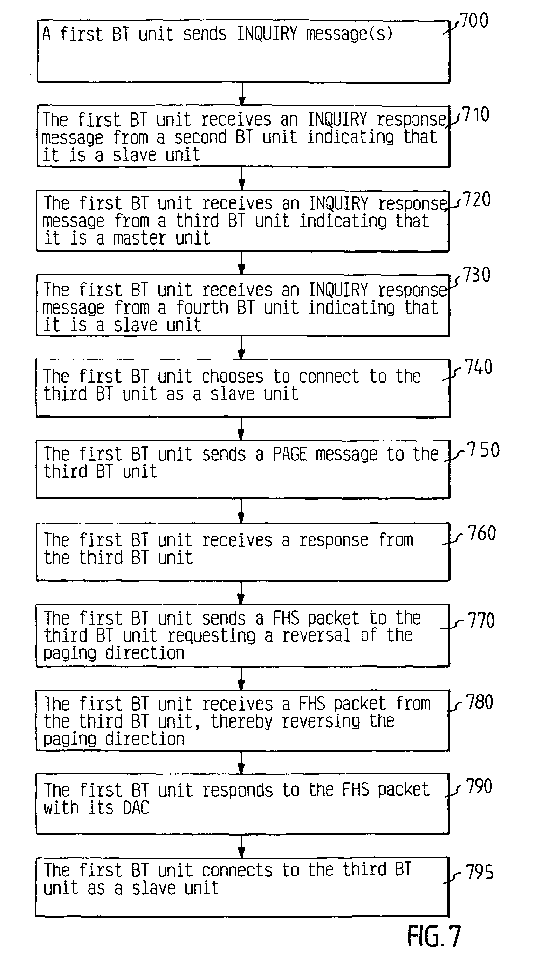

In Figure 7 can be seen a flowchart which provides an overview of how both the first part and second part of the present invention function together. A first BT unit sends 700 an INQUIRY message or messages. Any BT which receives this message will send an INQUIRY RESPONSE message back to the first BT unit which will then be received by the first BT unit. A second, third and fourth BT in this embodiment send an INQUIRY RESPONSE message to the first BT. This message will indicate that the BT sending the INQUIRY RESPONSE message is either a slave unit in some piconet, as for the second and fourth BTs, or a master unit in some piconet, as for the third BT. The message from the second BT will be received 710 by the second BT as will the message from the third BT 720 and the fourth.

Of the second, third and fourth responding BTs, only the third responded that it was a master unit in some piconet. The first BT will choose 740 to connect to this second BT as a slave unit. It then sends 750 a PAGE message to this third BT unit which responds to the first BT unit which then receives 760 this response.

In order for the first BT unit to be able to connect to the third BT unit as a slave without using the master-slave switch we then continue according to the second part of the present invention. The first BT unit sends 770 an FHS packet to the third BT unit requesting a reversal of the paging direction. This FHS packet is sent by the third BT unit which is received 780 by the first BT unit, thereby reversing the paging direction. To conclude the procedure the first BT unit responds 790 to the FHS packet with its DAC which will then connect 795 the first BT unit to the third BT unit as a slave unit.

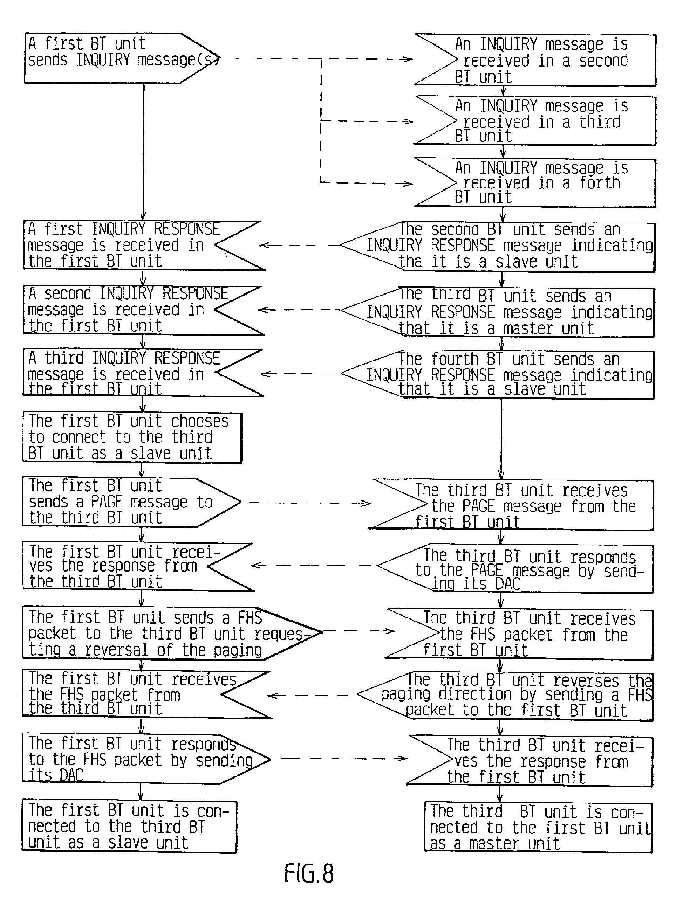

A slightly more detailed version of this procedure can also be seen in the flowchart in Figure 8.

The embodiments described above serve merely as illustration and not as limitation. It will be apparent to one of ordinary skill in the art that departures may be made from the embodiments described above without departing from the scope of the invention. The invention should not be regarded as being limited to the examples described, but should be regarded instead as being equal in scope to the following claims.

## Claims

1. A method for establishing a connection in a wireless master-slave adhoc system, wherein, after the connection is established, the system will contain one unit having the role of master and at least one unit having the role of slave, **characterised in that** an initiating unit which initiates the establishment of the connection, during the establishment phase requests or orders a second unit to let the initiating unit have the role of slave in the ad-hoc system, wherein the second unit connects to the ad-hoc system in the role of master and said initiating unit connects to the ad-hoc system in the role of slave.

2. The method of Claim 1, wherein said initiating unit is a first ad-hoc system unit neighboring another ad-hoc system, said establishment further including a method for said first ad-hoc system unit to discover the status of units in said another ad-hoc system by the exchange of system-related information during a neighbor discovery procedure.

3. A method according to claims 1 or 2, wherein said ad hoc system is a Bluetooth system comprising a first Bluetooth unit (first BT unit) and at least one Bluetooth unit (master BT unit), which is known to the first BT unit to have the role as a master of a piconet, the connection of the first BT unit to this at least one master BT unit as a slave unit comprising the steps of:
sending a PAGE message (750) from said first BT unit to said master BT unit;
sending a PAGE RESPONSE (760) from said master BT unit to said first BT unit; and
sending a Frequency Hop Synchronisation (FHS) packet (770) from said first BT unit to said master BT unit;
wherein said FHS packet includes an indication that said first BT unit wants a reversal of the paging direction from said master BT unit to said first BT unit.

4. The method of Claim 3 wherein said reversal of the paging direction is performed by terminating said current PAGE procedure and initiating a new PAGE procedure from said master BT unit to said first BT unit.

5. The method of Claim 3 wherein said reversal of the paging direction is performed by said master BT unit, which receives said request for reversal, said master BT unit sending an FHS packet to said first BT unit with all FHS parameters set as if the sender is the paging BT unit, said first BT unit responding with a packet including only said first BT units DAC, thereby concluding said reversal of the paging direction.

6. The method of Claims 3-5, when said paged BT unit does not accept said reversal of paging direction, said paged BT unit responding to said FHS packet with a second FHS packet including the same indication of request for reversal of paging direction, and said first BT unit receiving this second FHS packet choosing to either proceed with said PAGE procedure without reversing or abandoning said PAGE procedure.

7. The method of Claim 6, wherein if said first BT unit chooses to proceed with said PAGE procedure it proceeds by restarting the PAGE procedure by sending a new initial PAGE message.

8. The method of Claim 6, wherein if said first BT unit chooses to proceed with said PAGE procedure it proceeds by sending a third FHS message without an indication of request for reversal of paging direction.

9. A computer program product directly loadable into the internal memory of a digital computer, comprising software code portions for performing the steps of any of the preceding claims when said product is run on a computer.

10. A computer program product stored on a computer usable medium, comprising readable program means for causing a computer to control the execution of the steps in any of Claims 1-8.

## Patentansprüche

1. Verfahren zur Herstellung einer Verbindung in einem drahtlosen Master-Slave-Ad-hoc-System, wobei nach der Herstellung der Verbindung das System eine Einheit mit der Masterrolle und wenigstens eine Einheit mit der Slaverolle enthält, **dadurch gekennzeichnet, dass** eine Einleitungseinheit, welche die Herstellung der Verbindung einleitet, während der Herstellungsphase eine zweite Einheit auffordert oder anweist, die Einleitungseinheit die Slaverolle in dem Ad-hoc-System übernehmen zu lassen, wobei die zweite Einheit sich in der Masterrolle an das Ad-hoc-System abschließt und die Einleitungseinheit sich in der Slaverolle an das Ad-hoc-System anschließt.

2. Verfahren nach Anspruch 1, wobei die Einleitungseinheit eine Einheit eines ersten Ad-hoc-Systems benachbart zu einem anderen Ad-hoc-System ist, und die Herstellung ferner ein Verfahren für die Einheit des ersten Ad-hoc-Systems umfasst, um den Status von Einheiten in dem anderen Ad-hoc-System durch den Austausch von systembezogenen Informationen während einer Nachbarsermittlungsprozedur zu ermitteln.

3. Verfahren nach Anspruch 1 oder 2, wobei es sich bei dem Ad-hoc-System um ein Bluetooth-System handelt, das eine erste Bluetooth-Einheit (erste BT-Einheit) und wenigstens eine Bluetooth-Einheit (Master-BT-Einheit) umfasst, von welcher der ersten BT-Einheit bekannt ist, dass sie die Rolle eine Masters eines Pikonetzes hat, wobei die Verbindung der ersten BT-Einheit mit dieser wenigstens einen Master-BT-Einheit als eine Slaveeinheit die folgenden Schritte umfasst:
Senden einer PAGE-Nachricht (750) von der ersten BT-Einheit an die Master-BT-Einheit;
Senden einer PAGE RESPONSE (760) von der Master-BT-Einheit an die erste BT-Einheit; und
Senden eines Frequenzsprungsynchronisierungs (FHS)-Pakets (770) von der ersten BT-Einheit an die Master-BT-Einheit;
wobei das FHS-Paket eine Angabe umfasst, dass die erste BT-Einheit eine Umkehrung der Funkrufrichtung von der Master-BT-Einheit zur ersten BT-Einheit wünscht.

4. Verfahren nach Anspruch 3, wobei die Umkehrung der Funkrufrichtung durch Beenden der aktuellen PAGE-Prozedur und Einleiten einer neuen PAGE-Prozedur von der Master-BT-Einheit zur ersten BT-Einheit erfolgt.

5. Verfahren nach Anspruch 3, wobei die Umkehrung der Funkrufrichtung durch die Master-BT-Einheit durchgeführt wird, welche die Anforderung für die Umkehrung empfängt, wobei die Master-BT-Einheit ein FHS-Paket mit allen FHS-Parametern so eingestellt, als ob der Sender die anrufende BT-Einheit wäre, an die erste BT-Einheit sendet, und die erste BT-Einheit mit einem Paket antwortet, das nur den DAC der ersten BT-Einheit umfasst, um **dadurch** die Umkehrung der Funkrufrichtung abzuschließen.

6. Verfahren nach Anspruch 3 bis 5, wobei, wenn die abgerufene BT-Einheit die Umkehrung der Funkrufrichtung nacht akzeptiert, die angerufene BT-Einheit auf das FHS-Paket mit einem zweiten FHS-Paket antwortet, das dieselbe Angabe einer Anforderung für eine Umkehrung der Funkrufrichtung umfasst, und die erste BT-Einheit, die dieses zweite FHS-Paket empfängt, entweder wählt, mit der PAGE-Prozedur ohne Umkehrung fortzufahren, oder die PAGE-Prozedur aufgibt.

7. Verfahren nach Anspruch 6, wobei, wenn die erste BT-Einheit wählt, mit der PAGE-Prozedur fortzufahren, sie durch Neustarten der PAGE-Prozedur durch Senden einer neuen PAGE-Initialisierungsnachricht fortfährt.

8. Verfahren nach Anspruch 6, wobei, wenn die erste BT-Einheit wählt, mit der PAGE-Prozedur fortzufahren, sie durch Senden einer dritten FHS-Nachricht ohne Angabe einer Anforderung für eine Umkehrung der Funkrufrichtung fortfährt.

9. Computerprogrammprodukt, das direkt in den internen Speicher eines digitalen Computers geladen werden kann, umfassend Softwarecodeabschnitte zum Durchführen der Schritte nach einem der vorhergehenden Ansprüche, wenn es auf einem Computer ausgeführt wird.

10. Computerprogrammprodukt, das auf einem computerfähigen Medium gespeichert list, umfassend lesbare Programmmittel, um einen Computer zu veranlassen, die Ausführung der Schritte nach einem der Ansprüche 1 bis 8 zu steuern.

## Revendications

1. Procédé d'établissement d'une connexion dans un système ponctuel maître-esclave sans fil, dans lequel, après que la connexion a été établie, le système contiendra une unité ayant le rôle de maître et au moins une unité ayant le rôle d'esclave, **caractérisé en ce que** une unité d'amorce qui amorce l'établissement de la connexion, pendant la phase d'établissement, demande ou ordonne à une seconde unité de laisser l'unité d'amorce assumer le rôle de l'esclave dans le système ponctuel, dans lequel la seconde unité se connecte au système ponctuel dans le rôle de maître et ladite unité d'amorce se connecte au système ponctuel dans le rôle de l'esclave.

2. Procédé selon la revendication 1, dans lequel ladite unité d'amorce est une première unité de système ponctuel avoisinant un autre système ponctuel, ledit établissement incluant en outre un procédé permettant à ladite première unité de système ponctuel de découvrir le statut des unités dans ledit autre système ponctuel par l'échange d'informations relatives au système pendant une procédure de découverte de voisin.

3. Procédé selon les revendications 1 ou 2, dans lequel ledit système ponctuel est un système Bluetooth comprenant une première unité Bluetooth (première unité BT) et au moins une unité Bluetooth (unité BT maître), qui est connue pour être la première usité BT ayant le rôle de maître d'un piconet, la connexion de la première unité BT à cette au moins une unité BT maître comme une unité esclave comprenant les étapes consistant à :
envoyer un message RADIORECHERCHE (750) depuis ladite première unité BT à ladite unité BT maître ;
envoyer un message REPONSE DE RADIORECHERCHE(760) de ladite unité BT maître à ladite première unité BT ; et
envoyer un paquet de synchronisation de saut de fréquence (FHS) (770) de ladite première unité BT à ladite unité BT maître ;
dans lequel ledit paquet FHS inclut une indication que ladite première unité BT veut une inversion de la direction de radiorecherche depuis ladite unité BT maître à ladite première unité BT.

4. Procédé selon la revendication 3, dans lequel ladite inversion de la direction de radiorecherche est effectuée en mettant fin à ladite procédure RADIORECHERCHE actuelle et en amorçant une nouvelle procédure RADIORECHERCHE de ladite unité BT maître à ladite première unité BT.

5. Procédé selon la revendication 3, dans lequel ladite inversion de la direction de radiomessagerie est effectuée par ladite unité BT maître, qui reçoit ladite demande d'inversion, ladite unité BT maître envoyant un paquet FHS à ladite première unité BT avec tous les paramètres FHS réglés comme si l'émetteur est l'unité BT de radiorecherche, ladite première unité BT répondant avec un paquet incluant seulement lesdites premières unités BT, en mettant ainsi un terme à ladite inversion de la direction de radiorecherche.

6. Procédé selon les revendications 3 à 5, quand ladite unité BT radiorecherchée n'accepte pas ladite inversion de direction de radiorecherche, ladite unité BT radiorecherchée répondant audit paquet FHS avec un second paquet FHS incluant la même indication de demande d'inversion de la direction de radiorecherche, et ladite première unité ET recevant ce second paquet FHS choisissant soit de poursuivre ladite procédure RADIORECHERCHE sans inversion, soit d'abandonner ladite procédure RADIORECHERCHE.

7. Procédé selon la revendication 6, dans lequel si ladite première unité BT choisit de poursuivre ladite procédure RADIORECHERCHE, elle poursuit en redémarrant la procédure RADIORECHERCHE en envoyant un nouveau message RADIORECHERCHE initial.

8. Procédé selon la revendication 6, dans lequel si ladite première unité BT choisit de poursuivre ladite procédure RADIORECHERCHE, elle poursuit en envoyant un troisième message FHS sans une indication de demande d'inversion de direction de radiorecherche.

9. Produit de programme informatique directement chargeable dans la mémoire interne d'un ordinateur numérique, comprenant des portions de code logiciel pour exécuter les étapes d'une quelconque des revendications précédentes quand ledit produit est exécuté sur un ordinateur.

10. Produit de programme informatique mémorisé sur un support utilisable par un ordinateur, comprenant des moyens de programme pouvant être lus afin d'amener un ordinateur à commander l'exécution des étapes dans une quelconque des revendications 1 à 8.
